# EUROPEAN PATENT APPLICATION

(11) **EP 1 468 736 A1**
(43) Date of publication of application: **20.10.2004**
(21) Application number: 02753194.6
(22) Date of filing: 18.07.2002
(51) Int. Cl.: B01J 35/02, B01J 23/08, B01J 23/10

(54) **PHOTOCATALYST EXHIBITING CATALYTIC ACTIVITY EVEN IN VISIBLE LIGHT REGION**

(30) Priority: 08.08.2001 JP 2001241387
(71) Applicant: SUMITOMO METAL MINING COMPANY LIMITED, Tokyo 105-8716 (JP)
(72) Inventor: MATSUO, Shinya, Graduate School of Engineering, Suita-shi, Osaka 565-0871 (JP); OMATA, Takahisa, Graduate School of Engineering, Suita-shi, Osaka 565-0871 (JP)
(74) Representative: Leson, Thomas Johannes Alois, Dipl.-Ing.
(86) International application number: PCT/JP2002/007300
(87) International publication number: WO 2003/013726

(57) **Abstract**

The photocatalyst according to the present invention which exhibits a high catalytic function in the visible-light range comprises an oxide composite having a heterojunction comprising a p-type oxide semiconductor and an n-type oxide semiconductor which have photocatalytic properties with each other and at least one of which has photocatalytic properties even in the visible-light range. The p-type oxide semiconductor having photocatalytic properties even in the visible-light range is exemplified by a perovskite-type oxide Ca(Zr_{0.95}Y_{0.05})O_{3-δ}, and the n-type oxide semiconductor by an anatase-type titanium oxide.

## Description

### TECHNICAL FIELD

This invention relates to a photocatalyst comprised of an oxide composite, and more particularly to a photocatalyst having a catalytic activity even in the visible-light range.

### BACKGROUND ART

In recent years, positively utilizing the high oxidizing power and reducing power that are attributable to photocatalysts, research and development are being put forward on photocatalysts so that they can be put into practical use in various fields ranging from global-scale environmental purification such as purification of polluted air and polluted water and up to domestic-scale environmental purification such as deodorizing, stainproofing and antimicrobial treatment. Then, in many cases, these are directed to researches on compounds having photocatalytic action. Where promoters or carriers which accelerate reaction are used in combination, noble metals such as Pt and Rh and transition metal oxides such as NiO have been used on the basis of researches on conventional catalysts.

To state the matter below specifically, for example, anatase-type titanium oxide is known as a most typical oxide having photocatalytic action, and has already been put into practical use as deodorants, antimicrobial agents and stainproofing agents. However, those for which the titanium oxide exhibits the performance as a photocatalyst are only ultraviolet rays holding only 4% of sunlight. Accordingly, various improvements are attempted aiming at how the titanium oxide be made highly functional in the open air and be made responsive in the visible-light range. For example, various attempts have been made in Japan and abroad, including a method in which electrons are injected into titanium oxide from an adsorbed coloring matter in the state of its excitation, formed by making titanium oxide adsorb a coloring matter and making the coloring matter absorb visible light, a method in which metallic ions such as Cr, V, Mn, Fe or Ni ions are chemically injected into titanium oxide, a method in which oxygen deficiency is introduced into titanium oxide by plasma irradiation, and a method in which ions of a different species are introduced into titanium oxide. All of these methods, however, have problems that it is difficult to effect uniform dispersion, that the photocatalytic activity may lower because of the recombination of electrons and holes and that a high cost is required for making adjustment, and have not been put into use in an industrial scale.

Meanwhile, perovskite-type oxides attract notice recently as having a high catalytic activity. For example, in Japanese Patent Application Laid-open No. 7-24329, LaFeO₃ represented by the general formula: A³⁺B³⁺O₃ and SrMnOₓ represented by the general formula: A²⁺B³⁺Oₓ are proposed. In reality, however, any high catalytic activity has not been attained.

Researches are also energetically made on layered perovskite-type oxides. For example, in Japanese Patent Application Laid-open No. 10-244164, layered perovskite-type ABCO₄ is proposed. In Japanese Patent Application Laid-open No. 8-196912, a KLaCa₂Nb₃O₁₀-system compound oxide is proposed. Also, in Japanese Patent Application Laid-open No. 11-139826, KCa₂Nb₃O₁₀ is proposed. However, the principles and production processes of these are complicate and also there is a problem on the chemical stability of resultant oxides. Hence, these have not been put into use in an industrial scale.

In order to accelerate photocatalytic reaction which takes place at particle surfaces of these oxides having photocatalytic activity, it is also common to add as promoters noble metals such as Pt and Rh and transition metal oxides such as NiO and RuO₂ as mentioned previously. It, however, is not the case that these promoters have photocatalytic activity. These do not influence any wavelength range of the light to which the compound itself having photocatalytic action is responsive. In the case of NiO, it also has a problem that it must be used under complicate conditions such that it is first reduced and then oxidized to put it into use.

The present invention was made taking account of such problems. It is a subject of the present invention to provide an inexpensive photocatalyst which exhibits photocatalytic activity in the visible-light range on the basis of a simple and new mechanism.

Accordingly, in order to settle the above subject, the present inventors repeated extensive studies on the performance of photocatalysts. As the result, they have discovered the following: In a perovskite-type oxide which is a p-type oxide semiconductor represented by the general formula: A²⁺B⁴⁺₁₋ₓC³⁺ₓO_{3-δ} (provided that 0 < x ≤ 0.5 and 0 < δ < 0.5), having the ability to dissolve and retain hydrogen as hydrogen ions via holes produced by the doping with cations C as an acceptor on the site of B ions, the cations C having a lower valence than the B ions, the wavelength range of light within which this oxide semiconductor acts as a photocatalyst can be controlled by utilizing the acceptor levels produced by the doping with cations and the impurity levels ascribable to an external atmosphere which have acceleratedly been produced by the doping with cations, even though the energy band gap does not differ from that before the doping with cations and is kept constant, and this oxide semiconductor can be made to have photocatalytic activity effectively even in the visible-light range.

They have also discovered the following: The above perovskite-type oxide may be made to adhere and join to particles of titanium oxide, zinc oxide, tin oxide, zirconium oxide, strontium titanate or the like which is an n-type oxide semiconductor capable of acting in the near-ultraviolet range as reported in the past, to form a p-n heterojunction, where the flow of electrons from a p-type oxide semiconductor to an n-type oxide semiconductor and the flow of holes from the n-type oxide semiconductor to the p-type oxide semiconductor are produced at the part of p-n junction to enable spatial separation of electrons from holes. This enables control of the recombination of electrons and holes and also enables spatial separation of the position of reaction of the photocatalytic reaction in which these electrons and holes participate. Hence, cooperative action of these makes the photocatalyst have a high catalytic activity up to the visible-light range.

They have still also discovered the following: Electrons photo-excited in a p-type oxide semiconductor move to the surface of the p-type oxide semiconductor to accelerate the adsorption of molecules and ions which participate in photocatalytic reaction, onto this p-type oxide semiconductor, and thereafter the molecules and ions which participate in photocatalytic reaction collapsingly spread on to the n-type oxide semiconductor surface vicinal to the p-n junction. This is also an important factor of the high catalytic activity.

As a result of further studies on the relationship between the photocatalytic effect and the p-n heterojunction and on the flow of electrons and holes at the p-n junction, they have further discovered that the phenomenon that the catalytic activity is cooperatively enhanced occurs also in an oxide composite having a p-n heterojunction consisting of an n-type oxide semiconductor having photocatalytic properties in the visible-light range and a p-type oxide semiconductor having photocatalytic properties in a shorter wavelength range of light.

The present inventors have still further discovered that an oxide composite in a broad sense, having a junction in a broad concept inclusive of a p-n junction, i.e., an oxide composite having a junction formed by oxide semiconductors (I) and (II) whose energy levels of electrons at the bottom of the conduction band and energy levels of electrons at the top of the valence band in an energy band structure, based on the vacuum levels, differ from each other also function like the above oxide composite having a p-n heterojunction. This is proposed in a patent application different from the present application.

Incidentally, any study has never been made such that the compound semiconductors having two types of photocatalytic action, whose energy levels of electrons at the bottom of the conduction band and energy levels of electrons at the top of the valence band in an energy band structure, based on the vacuum levels, differ from each other are made into a composite so that the photocatalytic performance can cooperatively be improved, much less any study at all such that the flows of electrons and holes at a p-n junction are utilized to prepare a high-performance photocatalyst. The present invention has been accomplished on the bases of the above technical discoveries.

### DISCLOSURE OF THE INVENTION

The present invention is a photocatalyst having catalytic activity even in the visible-light range; the photocatalyst comprising an oxide composite having a junction formed by oxide semiconductors (I) and (II) which have photocatalytic properties with each other and whose energy levels of electrons at the bottom of the conduction band and energy levels of electrons at the top of the valence band in an energy band structure, based on the vacuum levels, differ from each other; at least one of the oxide semiconductors having photocatalytic properties even in the visible-light range;
the oxide composite comprising an oxide composite having a heterojunction comprising a p-type oxide semiconductor and an n-type oxide semiconductor.

In the photocatalyst according to the present invention, comprising the oxide composite having a heterojunction comprising a p-type oxide semiconductor and an n-type oxide semiconductor, as described previously the flow of electrons from the p-type oxide semiconductor to the n-type oxide semiconductor and the flow of holes from the n-type oxide semiconductor to the p-type oxide semiconductor are produced at the part of p-n junction to enable spatial separation of electrons from holes. This enables control of the recombination of electrons and holes and also enables spatial separation of the position of reaction of the photocatalytic reaction in which these electrons and holes participate. Hence, cooperative action of these can make the photocatalyst have a high catalytic activity up to the visible-light range.

As to the combination of the p-type oxide semiconductor with the n-type oxide semiconductor, it may be the combination of an n-type oxide semiconductor having photocatalytic properties even in the visible-light range with a p-type oxide semiconductor having photocatalytic properties in a shorter wavelength range than this n-type oxide semiconductor, or may be the combination of a p-type oxide semiconductor having photocatalytic properties even in the visible-light range with an n-type oxide semiconductor having photocatalytic properties in a shorter wavelength, range than this p-type oxide semiconductor.

The n-type oxide semiconductor or p-type oxide semiconductor having photocatalytic properties even in the visible-light range may also preferably have properties that it adsorbs the molecules and ions which participate in photocatalytic reaction at the time of irradiation by light.

The above oxide composite having a heterojunction comprising a p-type oxide semiconductor and an n-type oxide semiconductor may also be obtained by blending the p-type oxide semiconductor and the n-type oxide semiconductor in a weight ratio of Z: (1-Z) (provided that 0 < Z < 1), followed by firing under conditions of 300°C to 1,200°C.

### BRIEF DESCRIPTION OF THE DRAWINGS

Fig. 1(A) is a conceptual illustration diagrammatically showing the mechanism of the flows of electrons and holes via a p-n heterojunction of the photocatalyst according to the present invention, and Fig. 1(B) illustrates energy band structure at the p-n heterojunction of the photocatalyst according to the present invention.
Fig. 2 illustrates the construction of a light irradiation laboratory equipment used to evaluate the catalytic activity of photocatalysts according to Examples 1 to 5 and Comparative Example.
Fig. 3 is a graph showing the relationship between irradiation time and absorbance in photo-bleaching.
Fig. 4 illustrates energy band structure showing energy levels Ec of electrons at the bottom of the conduction band and energy levels Ev of electrons at the top of the valence band in an energy band structure, based on the vacuum levels.
Fig. 5 illustrates a crystal structure showing 1/8 of a unit lattice of a pyrochlore-type oxide represented by the general formula: A₂₋ₓB₂₊ₓO_{7+ (x/2) +y} (provided that -0.4 < x < +0.6 and -0.2 < y < +0.2) , in which the position indicated by a double circle shows the position of oxygen deficiency as viewed from a fluorite-type structure.

### BEST MODES FOR PRACTICING THE INVENTION

To describe the present invention in greater detail, it is described with reference to the accompanying drawings.

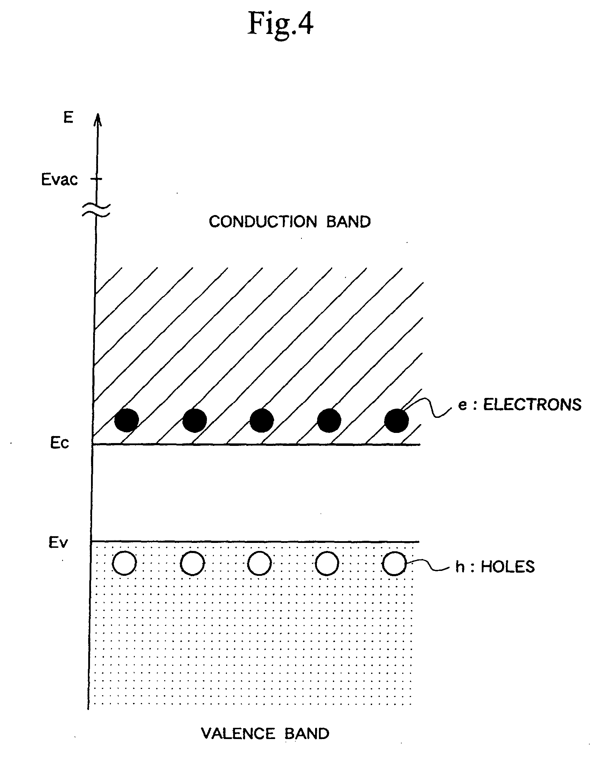

In the first place, the photocatalyst according to the present invention is a photocatalyst having catalytic activity even in the visible-light range, and the photocatalyst comprises an oxide composite having a junction formed by oxide semiconductors (I) and (II) which have photocatalytic properties with each other and whose energy levels Ec of electrons at the bottom of the conduction band and energy levels Ev of electrons at the top of the valence band in an energy band structure, based on the vacuum levels, differ from each other; at least one of the oxide semiconductors having photocatalytic properties even in the visible-light range; the energy band structure being the energy band structure shown in Fig. 4. In this photocatalyst, the oxide composite comprises an oxide composite having a heterojunction comprising a p-type oxide semiconductor and an n-type oxide semiconductor.

Then, the p-type oxide semiconductor having photocatalytic properties even in the visible-light range, constituting one component of the oxide composite may include a perovskite-type oxide represented by the general formula: A²⁺B⁴⁻₁₊ₓC³⁺ₓO_{3-δ} (provided that 0 < x ≤ 0.5 and 0 < δ < 0.5), which has been doped with cations C having a lower valence than B ions, within the range of 50 mol% at the maximum, and is capable of dissolving and retaining hydrogen as hydrogen ions; in the general formula, the A ion is at least one element selected from alkaline earth metal elements, the B ion is at least one element selected from lanthanoids, Group IVa elements and Group IVb elements and the C ion is at least one element selected from lanthanoids, Group IIIa elements and Group IIIb elements. It may also include titanium oxide doped with nitrogen, obtained by mixing and pulverizing titanium nitride (TiN) and titanium oxide (TiO₂), followed by firing and again pulverization.

In the above perovskite-type oxide represented by the general formula: A²⁺B⁴⁺₁₋ₓC³⁺ₓO_{3-δ} it is known that this oxide serves as a high-temperature proton (hydrogen ion) conductor at 600°C or above because the hydrogen dissolves as hydrogen ions via holes produced when doped with cations C on the site of B ions, having a lower valence than the latter. The present inventors have discovered that the use of such an oxide as a photocatalyst brings about a dramatic improvement in photocatalytic activity because such dissolution sites of hydrogen ions are numberless and active. They have also discovered that electrons can be excited via the acceptor levels formed in the energy band gap by the doping with cations C and via the impurity levels ascribable to an external atmosphere which have acceleratedly been produced by the doping with cations C and hence this oxide can be a material having photocatalytic action effectively for the visible light having a lower energy than the energy band gap.

Here, oxides with perovskite structure (perovskite oxides) represented by the general formula: ABO₃ are well known in the art. Stated strictly, the perovskite structure is meant to be a structure having a cubic unit lattice and belonging to a space group *Pm3m.* Not so many oxides assuming this structure are available. In many perovskite oxides, the unit lattice stands strained and aberrant from the cubic unit lattice, and hence they are called perovskite-type oxides.

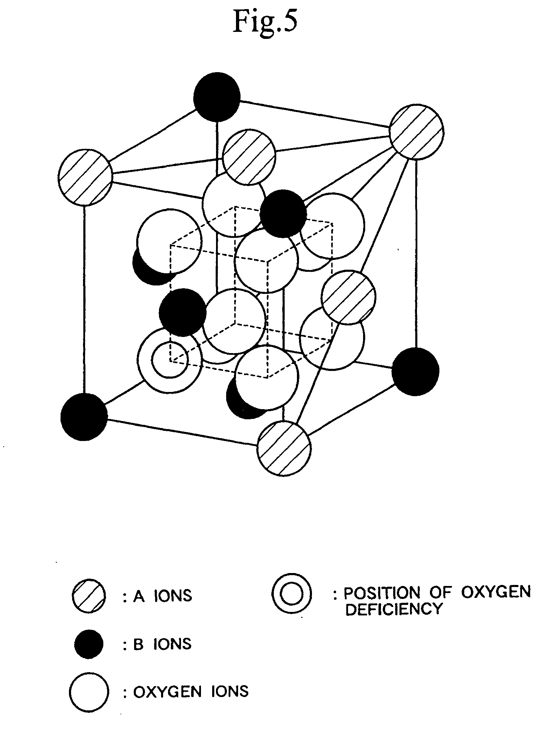

Meanwhile, the n-type oxide semiconductor in the case when the perovskite-type oxide is used as the p-type oxide semiconductor may include, e.g., any of titanium oxide of a rutile type or an anatase type or a mixed type of these two, zinc oxide, tin oxide, zirconium oxide, strontium titanate and a pyrochlore-related structural oxide which is represented by the general formula: A₂₋ₓB₂₊ₓO_{8-2δ} (provided that -0.4 < x < +0.6 and -0.5 < 2δ < +0.5) and in which oxygen ions have been inserted to at least one of the position of oxygen deficiency (see Fig. 5) and the interstitial position, as viewed from a fluorite-type structure of a pyrochlore-type oxide represented by the general formula: A₂₋ₓB₂₊ₓO_{7+(x/2)+y} (provided that -0.4 < x < +0.6 and -0.2 < y < +0.2) in which A ions and B ions which may assume a plurality of valences are each regularly arranged. Also, the n-type oxide semiconductor in the case when the titanium oxide doped with nitrogen ions is used as the p-type oxide semiconductor may include, e.g., any of tin oxide, zirconium oxide, strontium titanate and the above pyrochlore-related structural oxide.

Then, from Examples given below in which a powder of the perovskite-type oxide represented by the general formula: A²⁺B⁴⁺₁₋ₓC³⁺ₓO_{3-δ} (provided that 0 < x ≤ 0.5 and 0 < δ < 0.5) is used as the p-type oxide semiconductor and a powder of the anatase-type titanium oxide are used as the n-type oxide semiconductor, the following has been ascertained.

Stated specifically, the perovskite-type oxide powder and the anatase-type titanium oxide powder were mixed in a weight ratio of Z: (1-Z) (provided that 0 < Z < 1) and the mixture obtained was subjected to firing at 700°C for 1 hour, followed by pulverization by means of a mortar to first prepare powders (photocatalysts) according to Examples.

The powders (photocatalysts) according to Examples were each dispersed in an aqueous Methylene Blue solution and also the decolorization (bleaching) of Methylene Blue due to irradiation by light was tested.

Then, it has been ascertained that the photocatalytic properties of the powders (photocatalysts) according to Examples have greatly been improved on account of the appearance of p-n heterojunction that is attributable to the firing.

More specifically, in the middle of the bleaching, the color of powder samples (powders according to Examples) turned deeply bluish as a result of the formation of the oxide composites comprised of titanium oxide and p-type oxide semiconductors according to Examples, and the blueness of the samples disappeared at the time the bleaching was completed.

On the other hand, where only titanium oxide powder was used, i.e., Z = 0 (Comparative Example), the sample was always in white color both in the middle of the bleaching and at the time it was completed. Also, where only a perovskite-type oxide Ca(Zr_{0.95}Y_{0.05})O_{3-δ} was used, i.e., Z = 1, the sample was a little bluish in the middle of the bleaching and the blueness disappeared at the time the bleaching was completed.

These phenomena have proved that the presence of the p-n heterojunction accelerates the adsorption of Methylene Blue on the perovskite-type oxide.

In the p-n heterojunction, as known in the art, electrons flow from the p-type oxide semiconductor to the n-type oxide semiconductor and holes flow from the n-type oxide semiconductor to the p-type oxide semiconductor. Here, photo-excited electrons move to the surface of the p-type oxide semiconductor, and this accelerates the adsorption of molecules and ions which participate in photocatalytic reaction, onto the p-type oxide semiconductor, and thereafter the molecules and ions which participate in photocatalytic reaction collapsingly spread on to the n-type oxide semiconductor surface vicinal to the p-n junction. As the result, the photo-excited electrons flow at the surface (the side coming into contact with the outside) of the p-n junction, and photo-excited holes flow at the middle of the p-n junction, so that the electrons and the holes are spatially separated from each other, making it difficult for the electrons and holes to recombine.

As a result of accelerating the adsorption of molecules and ions which participate in photocatalytic reaction onto the p-type oxide semiconductor, the electrons photo-excited in the n-type oxide semiconductor are also attracted to the surfaces of the p-n heterojunction, so that the spatial separation of electrons from holes more proceeds. Electrons photo-excited by visible light in the p-type oxide semiconductor flow to titanium oxide, the n-type oxide semiconductor, to contribute to photocatalytic action, and hence the energy of visible light can also effectively be utilized.

In addition, the photocatalytic action of the oxide composite having such a p-n heterojunction has various advantages such that, since the electrons can cause photocatalytic reaction at the p-n junction, the energy of electrons participating in the reaction can be higher than the energy of electrons in the titanium oxide. For example, it has a possibility of acting advantageously also on the decomposition of water.

A like phenomenon appears also in respect of an oxide composite in which the n-type oxide semiconductor has photocatalytic properties in the visible-light range and the p-type oxide semiconductor has photocatalytic properties in a shorter wavelength range.

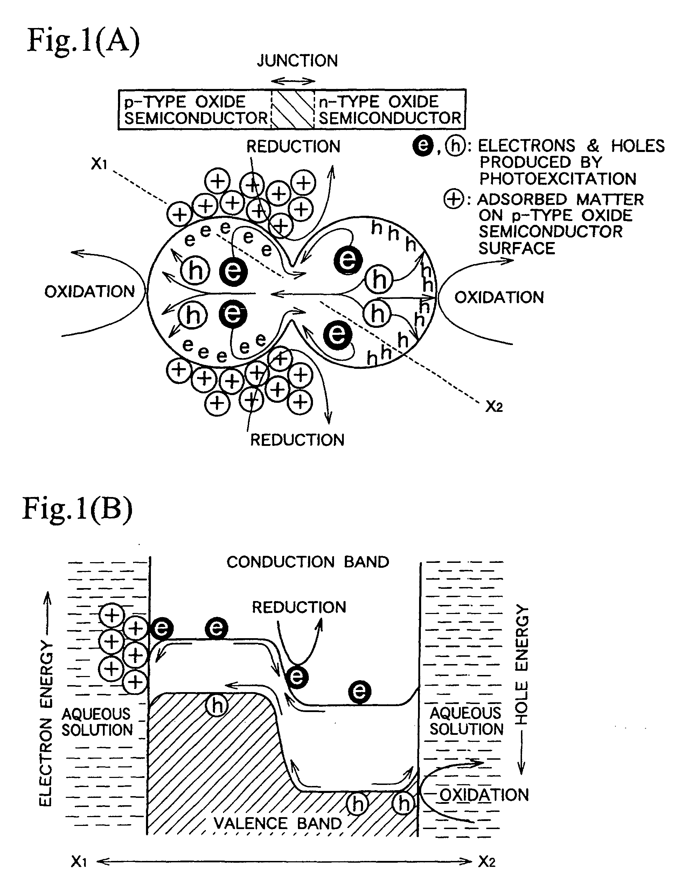

Next, in respect of the mechanism of the flows of electrons and holes via the p-n heterojunction in the above oxide composite having p-n heterojunction, its example is diagrammatically shown in Fig. 1A. Fig. 1(B) also illustrates energy band structure at the p-n heterojunction of the above oxide composite. Incidentally, what is shown in Fig. 1(A) is an example showing the mechanism qualitatively. It is presumed that the flows of electrons and holes may differ depending on the difference in light absorption characteristics between the p-type oxide semiconductor and the n-type oxide semiconductor and on the difference in adsorption characteristics between molecules and ions which participate in the photocatalytic reaction. However, as long as the light absorption characteristics differ even slightly between the p-type oxide semiconductor and the n-type oxide semiconductor, the spatial separation of the flows of electrons and holes at the p-n heterojunction takes place.

Here, the powder of the perovskite-type oxide represented by the general formula: A²⁺B⁴⁺₁₋ₓC³⁺ₓO_{3-δ} (provided that 0 < x ≤ 0.5 and 0 < δ < 0.5) used as the p-type oxide semiconductor in the present invention may be synthesized by a conventional solid-phase process, i.e., by mixing raw-material oxides or carbonates of the corresponding metallic components and a salt such as a nitrate in the intended compositional ratio, followed by firing. It may also be synthesized by other wet-process or gaseous-phase process.

The cations C having a lower valence than B ions, doped as an acceptor on the site of B ions, must be doped in an amount of 0 < x ≤ 0.5. This is because, if the value of x is more than 0.5, any different phase may become deposited in a large quantity, resulting in a low photocatalytic performance.

Here, in, e.g., ZrO₂ available at present, approximately from 0.9 to 2.0 mol% of HfO₂ is inevitably contained, and the ZrO₂ is weighed in the state the HfO₂ is contained, which, however, does not make poor the photocatalytic properties of the compound prepared finally.

Starting sample powder of the above perovskite-type oxide is mixed and thereafter dried at 100 to 140°C in a thermostatic chamber, followed by calcination at 1,350 to 1, 450°C for 10 to 50 hours in an oxygen-containing gas such as air. After the calcination, the calcined product is pulverized by means of a mortar or the like, and the pulverized product is mixed by means of a planetary tumbling mill or the like. Thereafter, the mixture obtained is green-compact molded at a pressure of 200 to 300 MPa, followed by firing at 1,450 to 1,650°C for 50 to 60 hours in an oxygen-containing gas such as air. Thus, the desired oxide is obtained.

The perovskite-type oxide as the p-type oxide semiconductor, thus obtained, is pulverized by means of a mortar or the like to make it into powder, and the powder obtained is'mixed with a powder of anatase-type titanium oxide obtained by a conventional method as shown in Comparative Example given later. The latter is weighed in the proportion of Z: (1-Z) (provided that 0 < Z < 1) in weight ratio, and the both is mixed by means of a mortar, a ball mill or the like.

The sample obtained by mixing them is fired at 300 to 1,200°C for about 5 minutes to about 2 hours to prepare the oxide composite having p-n heterojunction. If the firing temperature is lower than 300°C, any good p-n junction may not be obtainable. If it is higher than 1,200°C, a reaction phase of a different type may be formed, resulting in a low photocatalytic performance.

As methods for obtaining the oxide composite having p-n heterojunction, in addition to the above method, the following method may also be exemplified. That is, it is a method in which, e. g., titanium hydroxide, zinc hydroxide, tin hydroxide, zirconium hydroxide, titanium oxyhydroxide, zinc oxyhydroxide, tin oxyhydroxide, zirconium oxyhydroxide, titanium oxide, zinc oxide, tin oxide, zirconium oxide or strontium titanate is chemically deposited on the particle surfaces of fine powder of the p-type oxide semiconductor perovskite-type oxide. In this case, as a matter of course, heat treatment at 300 to 1,200°C is required.

Then, as to the shape of the photocatalyst having p-n heterojunction according to the present invention, the photocatalyst may preferably comprise particles having a large specific surface area so that the light can effectively be utilized. In general, it is suitable for the particles to have a particle diameter of from 0.1 to 10 µm, and preferably from 0.1 to 1 µm. As a means conventionally used to obtain the powder of the oxide composite having p-n heterojunction with such a particle diameter, first the p-type oxide semiconductor perovskite-type oxide and the n-type oxide semiconductor titanium oxide are each manually pulverized by means of a mortar, or pulverized by means of a ball mill or a planetary tumbling ball mill. The two kinds of powders thus obtained are weighed and mixed and the mixture formed is fired to obtain the oxide composite having p-n heterojunction, followed by pulverization again carried out to obtain a final sample powder.

The present invention is specifically described below by giving Examples. Note, however, that the present invention is by no means limited to the following Examples.

### Example 1

### Preparation of sample:

### - Preparation of Ca(Zr_{0.95}Y_{0.05})O_{3-δ} -

### (Raw materials)

CaCO₃ powder (a product of Kohjundo Kagaku Kenkyusho K.K.; purity: 99.99%, ig.-loss: 0.04%): 5.2126 g.

ZrO₂ powder (a product of Santoku Kinzoku Kogyo K.K.; purity: 99.60%, comprised of ZrO₂ + HfO₂; ig.-loss: 0.51%): 6.1693 g.

Y₂O₃ powder (a product of Kohjundo Kagaku Kenkyusho K.K.; purity: 99.9%, ig.-loss: 2.07%): 0.3001 g.

In the foregoing, "ig.-loss" indicates a loss due to water content, absorbed matter and so forth.

### (Mixing)

1. The powder samples having been weighed were mixed for 1.5 hours with addition of ethanol, using a mortar made of zirconia.
2. The sample obtained by the mixing was dried and then put into a pot made of zirconia, followed by pulverization for 40 minutes by means of a planetary tumbling ball mill.

### (Drying)

The sample having been pulverized was dried at 120°C for 30 minutes or more in a thermostatic chamber.

### (Calcination)

The sample having been dried was put in a crucible made of rhodium/platinum, and calcined at 1,350°C for 10 hours in the atmosphere.

### (Re-pulverization/mixing/drying)

After the calcination, the sample was again pulverized by means of a mortar, followed by mixing by means of the planetary tumbling ball mill. Thereafter, the mixture obtained was dried under the same conditions as the above drying.

### (Molding)

The dried powder obtained was molded at a pressure of 265 MPa into a disk of 17 mm in diameter.

### (Firing)

The sample having been molded was put into a crucible made of rhodium/platinum, and fired at 1, 650°C for 50 hours in the atmosphere.

### (Pulverization)

After the firing, the sample was pulverized for 1 hour by means of a zirconia mortar to obtain a sample powder.

### (Hydrogen dissolution)

In the fired product thus prepared, hydrogen stood dissolved as ions. The fired product also had composition of Ca(Zr_{0.95}Y_{0.05})O_{3-δ} (the value of δ is a numerical value of within 0 < δ < 0.5; the same applies hereinafter).

### (Production of anatase-type titanium oxide)

Using a titanium sulfate solution, a precipitate of a hydroxide was formed using ammonia as an alkali treatment solution, and also this precipitate was subjected to firing in the atmosphere under conditions of 650°C for 1 hour to obtain an anatase-type titanium oxide (n-type oxide semiconductor).

### (Production of oxide composite having p-n junction)

### (Mixing)

The anatase-type titanium oxide (n-type oxide semiconductor) prepared by the above method and Ca(Zr_{0.95}Y_{0.05})O_{3-δ} (p-type oxide semiconductor) were collected in a weight ratio shown below, and were dry-process mixed for 30 minutes by means of a zirconia mortar.

| | |
|---|---|
| Titanium oxide: 0.8272 g, Ca(Zr_{0.95}Y_{0.05})O_{3-δ} | 0.5002 g (weight ratio: 62:38). |
| Titanium oxide: 0.7220 g, Ca(Zr_{0.95}Y_{0.05})O_{3-δ} | 0.0802 g (weight ratio: 90:10). |
| Titanium oxide: 0.8563 g, Ca(Zr_{0.95}Y_{0.05})O_{3-δ} | 0.0451 g (weight ratio: 95:05). |

### (Firing)

The samples obtained by the mixing were each put into a crucible made of rhodium/platinum, and fired at 700°C for 1 hour in the atmosphere.

### (Pulverization)

The fired products obtained were each dry-process pulverized for 30 minutes by means of a zirconia mortar to obtain sample powders.

### Example 2

### - Preparation of Ca(Zr_{0.95}Ga_{0.05})O_{3-δ} -

Ca(Zr_{0.95}Ga_{0.05})O_{3-δ} was prepared in the same manner as in Example 1 except that the following raw materials were used.

### (Raw materials)

CaCO₃ powder (a product of Kohjundo Kagaku Kenkyusho K.K.; purity: 99.99%, ig.-loss: 0.04%): 3.9670 g.

ZrO₂ powder (a product of Santoku Kinzoku Kogyo K.K.; purity: 99.60%, comprised of ZrO₂ + HfO₂; ig.-loss: 0.51%): 4.6616 g.

Ga₂O₃ powder (a product of Kohjundo Kagaku Kenkyusho K.K.; purity: 99.99%, ig.-loss: 0.03%): 0.3714 g.

### (Production of oxide composite having p-n junction)

Anatase-type TiO₂ (n-type oxide semiconductor) prepared in the same manner as in Example 1 and Ca(Zr_{0.95}Ga_{0.05})O_{3-δ} (p-type oxide semiconductor) were collected in a weight ratio shown below, and were dry-process mixed for 30 minutes by means of a zirconia mortar, followed by the same subsequent procedure as in Example 1 to obtain sample powders.

| | |
|---|---|
| TiO₂: 0.7965 g, Ca(Zr_{0.95}Ga_{0.05})O_{3-δ} | 0.4289 g (weight ratio: 65:35). |
| TiO₂: 0.6064 g, Ca(Zr_{0.95}Ga_{0.05})O_{3-δ} | 0.1516 g (weight ratio: 80:20). |
| TiO₂: 0.4743 g, Ca(Zr_{0.95}Ga_{0.05})O_{3-δ} | 0.0527 g (weight ratio: 90:10). |
| TiO₂: 0.5551 g, Ca(Zr_{0.95}Ga_{0.05})O_{3-δ} | 0.0418 g (weight ratio: 93:07). |
| TiO₂: 0.4791 g, Ca(Zr_{0,9}Ga_{0.05})O_{3-δ} | 0.0252 g (weight ratio: 95:05). |

### Example 3

### - Preparation of Sr(Zr_{0.95}Y_{0.05})O_{3-δ} -

Sr(Zr_{0.95}Y_{0.05})O_{3-δ} was prepared in the same manner as in Example 1 except that the following raw materials were used.

### (Raw materials)

SrCO₃ powder (a product of Kohjundo Kagaku Kenkyusho K.K.; purity: 99.99%, ig.-loss: 0.05%): 4.8139 g.

ZrO₂ powder (a product of Santoku Kinzoku Kogyo K.K.; purity: 99.60%, comprised of ZrO₂ + HfO₂; ig.-loss: 0.51%): 3.8348 g.

Y₂O₃ powder (a product of Kohjundo Kagaku Kenkyusho K.K.; purity: 99.9%, ig.-loss: 2.07%): 0.1879 g.

### (Production of oxide composite having p-n junction)

Anatase-type TiO₂ (n-type oxide semiconductor) prepared in the same manner as in Example 1 and Sr(Zr_{0.95}Y_{0.05})O_{3-δ} (p-type oxide semiconductor) were collected in a weight ratio shown below, and were dry-process mixed for 30 minutes by means of a zirconia mortar, followed by the same subsequent procedure as in Example 1 to obtain sample powders.

| | |
|---|---|
| TiO₂: 0.7013 g, Sr(Zr_{0.95}Y_{0.05})O_{3-δ} | 0.3776 g (weight ratio: 65:35). |
| TiO₂: 0.8642 g, Sr(Zr_{0.95}Y_{0.05})O_{3-δ} | 0.2161 g (weight ratio: 80:20). |
| TiO₂: 0.6983 g, Sr(Zr_{0.95}Y_{0.50})O_{3-δ} | 0.0368 g (weight ratio: 95:05). |

### Example 4

### - Preparation of Sr(Ce_{0.95}Y_{0.05})O_{3-δ} -

Sr(Ce_{0.95}Y_{0.05})O_{3-δ} was prepared in the same manner as in Example 1 except that the following raw materials were used and the calcination and firing were carried out in the following manner.

### (Raw materials)

SrCO₃ powder (a product of Kohjundo Kagaku Kenkyusho K.K.; purity: 99.99%, ig.-loss: 0.05%): 4.3875 g.

CeO₂ powder (a product of Santoku Kinzoku Kogyo K.K.; purity: 99.60%, comprised of ZrO₂ + HfO₂; ig.-loss: 0.51%): 5.0463 g.

Y₂O₃ powder (a product of Kohjundo Kagaku Kenkyusho K.K.; purity: 99.9%, ig.-loss: 2.07%): 0.1712 g.

### (Calcination)

The sample having been dried was put in a crucible made of rhodium/platinum, and calcined at 1,400°C for 10 hours in the atmosphere.

### (Firing)

The sample having been molded was put into a crucible made of rhodium/platinum, and fired at 1, 500°C for 50 hours in the atmosphere.

### (Production of oxide composite having p-n junction)

Anatase-type TiO₂ (n-type oxide semiconductor) prepared in the same manner as in Example 1 and Sr(Ce_{0.95}Y_{0.05})O_{3-δ} (p-type oxide semiconductor) were collected in a weight ratio shown below, and were dry-process mixed for 30 minutes by means of a zirconia mortar, followed by the same subsequent procedure as in Example 1 to obtain sample powders.

| | |
|---|---|
| TiO₂: 0.6522 g, Sr(Ce_{0.95}Y_{0.05})O_{3-δ} | 0.3512 g (weight ratio: 65:35). |
| TiO₂: 0.6673 g, Sr(Ce_{0.95}Y_{0.05})O_{3-δ} | 0.1668 g (weight ratio: 80:20). |
| TiO₂: 0.4527 g, Sr(Ce_{0.95}Y_{0.05})O_{3-δ} | 0.0503 g (weight ratio: 90:10). |

### Example 5

### - Preparation of Ca(Zr_{0.95}Er_{0.05})O_{3-δ} -

Ca(Zr_{0.95}Er_{0.05})O_{3-δ} was prepared in the same manner as in Example 1 except that the following raw materials were used.

### (Raw materials)

CaCO₃ powder (a product of Kohjundo Kagaku Kenkyusho K.K.; purity: 99.99%, ig.-loss: 0.04%): 5.4806 g.

ZrO₂ powder (a product of Santoku Kinzoku Kogyo K.K.; purity: 99.60%, comprised of ZrO₂ + HfO₂; ig.-loss: 0.51%): 6.4862 g.

Er₂O₃ powder (a product of Kohjundo Kagaku Kenkyusho K.K.; purity: 99.9%, ig.-loss: 0.11%): 0.5240 g.

### (Production of oxide composite having p-n junction)

Anatase-type TiO₂ (n-type oxide semiconductor) prepared in the same manner as in Example 1 and Ca(Zr_{0.95}Er_{0.05})O_{3-δ} (p-type oxide semiconductor) were collected in a weight ratio shown below, and were dry-process mixed for 30 minutes by means of a zirconia mortar, followed by the same subsequent procedure as in Example 1 to obtain sample powders.

| | |
|---|---|
| TiO₂: 0.6855 g, Ca(Zr_{0.95}Er_{0.05})O_{3-δ} | 0.3691 g (weight ratio: 65:35). |
| TiO₂: 0.7122 g, Ca(Zr_{0.95}Er_{0.05})O_{3-δ} | 0.1781 g (weight ratio: 80:20). |
| TiO₂: 0.6001 g, Ca(Zr_{0.95}Er_{0.05})O_{3-δ} | 0.0667 g (weight ratio: 90:10). |

### Comparative Example

Using a titanium sulfate solution, a precipitate of a hydroxide was formed using ammonia as an alkali treatment solution, and also this precipitate was subjected to firing in the atmosphere under conditions of 650°C for 1 hour to obtain an anatase-type titanium oxide (conventional photocatalyst).

### Evaluation of Photocatalytic Action

The catalytic activity of the photocatalysts according to Examples 1 to 5 and Comparative Example was evaluated by a photo-bleaching method using an aqueous Methylene Blue (MB) solution.

This is a method in which an aqueous Methylene Blue solution and a measuring sample (each of the photocatalysts according to Examples 1 to 5 and Comparative Example) are put into the same container, and then irradiated by light to examine with a spectrophotometer the extent to which the Methylene Blue decomposes by the photocatalytic effect.

### (Preparation of aqueous Methylene Blue solution)

Methylene Blue (guaranteed reagent, available from Kanto Chemical Co., Inc.)
Ultrapure water (resistivity: 18.2 MΩ·cm or more)

7.48 mg of the above Methylene Blue was precisely weighed, and the whole was dissolved in 1 liter of the ultrapure water using a measuring flask to make up an aqueous solution of 2.0 x 10⁻⁵ mol/liter (mol·dm⁻³) of Methylene Blue.

### (Light irradiation)

### A. Laboratory Equipment

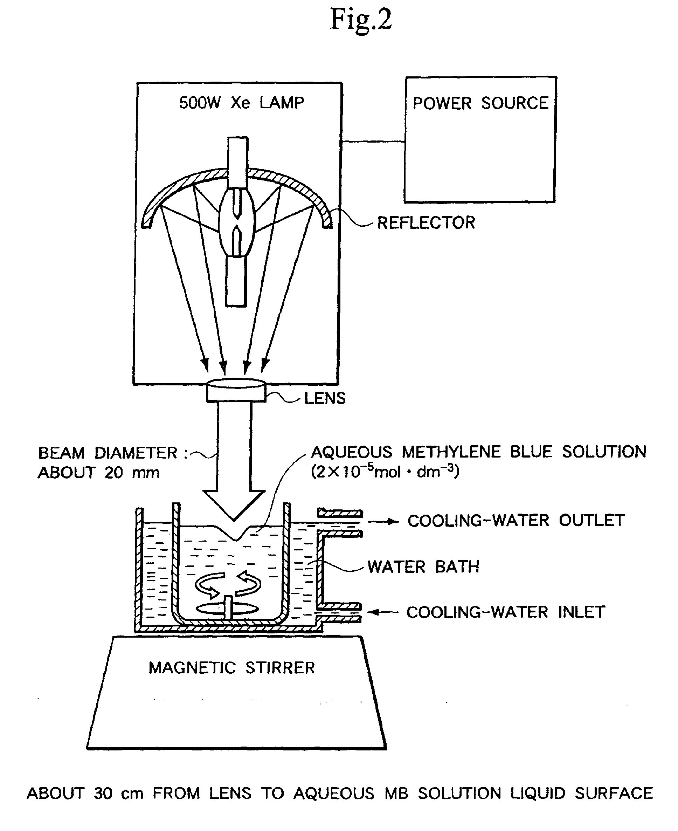

A schematic view of an equipment is shown in Fig. 2.
Light source: A 500 W xenon lamp of a lower-part irradiation type.
Filter: U340 filter (UV-transmissive and visible-light-absorptive).
Spectrophotometer: U4000 spectrophotometer, manufactured by Hitachi Ltd.

### B. Sample Solution

0.20 g of each of the photocatalysts (samples) according to Examples 1 to 5 and Comparative Example was dispersed in 200 cm³ of the aqueous Methylene Blue solution by means of a magnetic stirrer.

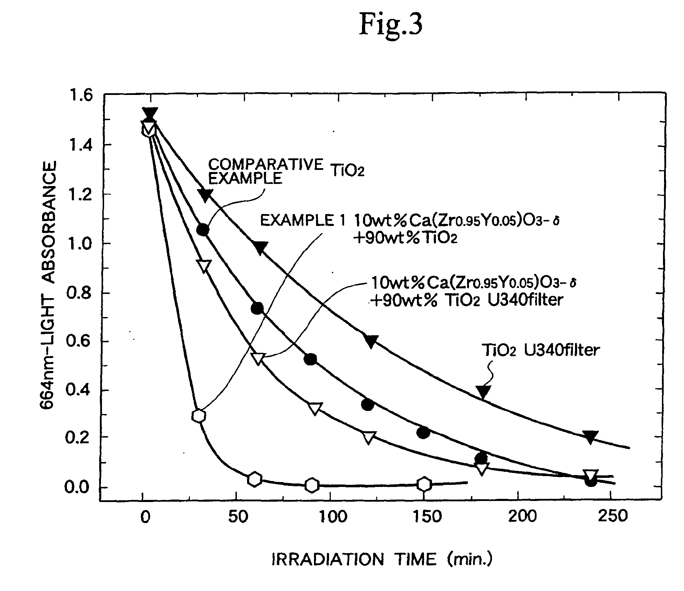

The aqueous Methylene Blue solutions in which the respective samples were kept dispersed were each collected in a quartz cell, and their transmission spectra were each measured with the spectrophotometer. Here, samples of Examples and Comparative Example were tested by light irradiation without using the filter (i.e., the light contains visible light and ultraviolet light). Also, samples of Example 1 and Comparative Example were additionally tested by light irradiation using the filter (i.e., the light is only ultraviolet light, not containing visible light) (inscribed as "U340filter" in Fig. 3).

The samples having been subjected to measurement were restored, and the stirring and light irradiation were repeated thereon, where the transmission spectra were measured at every lapse of time to determine their absorbance.

The rate of bleaching was evaluated by a reciprocal of time for which the absorbance changed from 1.0 to 0.1.

The results obtained are shown in Table 1 and by graphic representation in Fig. 3.

**Table 1**

| Type of perovskite oxide | Content of perovskite oxide | Time taken for bleaching during which absorbance changes from 1.0 to 0.1 |
|---|---|---|
| | (wt.%) | (min.) |
| Example 1: | | |
| | 38 | 116 |
| Ca(Zr_{0,95}Y_{0.05})O_{3-δ} | 10 | 52 |
| | 5 | 46 |
| | | |

| Example 2: | | |
|---|---|---|
| | 35 | 120 |
| | 20 | 102 |
| Ca(Zr_{0.95}Ga_{0.05})O_{3-δ} | 10 | 48 |
| | 7 | 53 |
| | 5 | 52 |
| | | |

| Example 3: | | |
|---|---|---|
| | 35 | 140 |
| Sr(Zr_{0.95}Y_{0.05})O_{3-δ} | 20 | 94 |
| | 5 | 56 |
| | | |

| Example 4: | | |
|---|---|---|
| | 35 | 120 |
| Sr(Ce_{0.95}Y_{0.05})O_{3-δ} | 20 | 115 |
| | 10 | 58 |
| | | |

| Example 5: | | |
|---|---|---|
| | 35 | 110 |
| Ca(Zr_{0.95}Er_{0.05})O_{3-δ} | 20 | 98 |
| | 10 | 53 |
| | | |

| Comparative Example: | | |
|---|---|---|
| Anatase-type TiO₂ | - | 148 |

### Confirmation

1. As can be seen from Table 1 and the graphic representation in Fig. 3, in the case when the photocatalysts (samples) according to Examples are used, the time taken for bleaching during which the absorbance changes from 1.0 to 0.1 is shorter than that of the photocatalyst (sample) according to Comparative Example. It is confirmed therefrom that the photocatalysts (samples) according to Examples have catalytic activity superior to that of the photocatalyst (sample) according to Comparative Example.
2. From comparison of the curves having the inscription "U340filter" in Fig. 3 (the case of irradiation by only ultraviolet light, not containing visible light) with the curves not having the inscription "U340filter" (the case of irradiation by light containing visible light and ultraviolet light), it is also confirmed that, both in Example 1 and Comparative Example, the time taken for bleaching is shorter in the case of irradiation by light containing visible light and ultraviolet light. However, the light transmitted through the U340filter used here has a wavelength of 260 to 390 nm and is at a maximum transmittance of 78%, and hence, in the case of TiO₂, the absorbance decreases to substantially the same extent when calculated proportionally. On the other hand, in Example 1, even when calculated like the above, the absorbance decreases greatly in the case of irradiation by light containing visible light and ultraviolet light. Thus, it is confirmed that Methylene Blue decomposes at a higher rate.

### POSSIBILITY OF INDUSTRIAL APPLICATION

As described above, the photocatalyst according to the present invention can exhibit a high catalytic function in the visible-light range, and is suited as a photocatalyst used for decomposition treatment of environmental pollutants, deodorization, stainproofing, antimicrobial treatment, antifogging and so forth.

## Claims

1. A photocatalyst having catalytic activity even in the visible-light range; the photocatalyst comprising an oxide composite having a junction formed by oxide semiconductors (I) and (II) which have photocatalytic properties with each other and whose energy levels of electrons at the bottom of the conduction band and energy levels of electrons at the top of the valence band in an energy band structure, based on the vacuum levels, differ from each other; at least one of the oxide semiconductors having photocatalytic properties even in the visible-light range;
said oxide composite comprising an oxide composite having a heterojunction comprising a p-type oxide semiconductor and an n-type oxide semiconductor.

2. The photocatalyst having catalytic activity even in the visible-light range according to claim 1, wherein said n-type oxide semiconductor has photocatalytic properties even in the visible-light range and said p-type oxide semiconductor has photocatalytic properties in a shorter wavelength range than the n-type oxide semiconductor.

3. The photocatalyst having catalytic activity even in the visible-light range according to claim 1, wherein said p-type oxide semiconductor has photocatalytic properties even in the visible-light range and said n-type oxide semiconductor has photocatalytic properties in a shorter wavelength range than the p-type oxide semiconductor.

4. The photocatalyst having catalytic activity even in the visible-light range according to claim 2 or 3, wherein said n-type oxide semiconductor or p-type oxide semiconductor having photocatalytic properties even in the visible-light range has properties that it adsorbs molecules and ions which participate in photocatalytic reaction at the time of irradiation by light.

5. The photocatalyst having catalytic activity even in the visible-light range according to claim 1, 2, 3 or 4, wherein said oxide composite has been obtained by blending the p-type oxide semiconductor and the n-type oxide semiconductor in a weight ratio of Z: (1-Z) (provided that 0 < Z < 1) , followed by firing under conditions of from 300°C to 1,200°C.

6. The photocatalyst having catalytic activity even in the visible-light range according to claim 1, 3, 4 or 5, wherein said p-type oxide semiconductor having photocatalytic properties even in the visible-light range comprises a perovskite-type oxide capable of dissolving and retaining hydrogen as hydrogen ions via holes produced when doped with an acceptor, and said n-type oxide semiconductor is any of titanium oxide of a rutile type or an anatase type or a mixed type of these two, zinc oxide, tin oxide, zirconium oxide, strontium titanate and a pyrochlore-related structural oxide which is represented by the general formula: A₂₋ₓB₂₊ₓO_{8-2δ} (provided that -0.4 < x < +0.6 and -0.5 < 2δ < +0.5) and in which oxygen ions have been inserted to at least one of the position of oxygen deficiency and the interstitial position, as viewed from a fluorite-type structure of a pyrochlore-type oxide represented by the general formula: A₂₋ₓB₂₊ₓO_{7+(x/2)+y} (provided that -0.4 < x < +0.6 and -0.2 < y < +0.2) in which A ions and B ions which may assume a plurality of valences are each regularly arranged.

7. The photocatalyst having catalytic activity even in the visible-light range according to claim 6, wherein said perovskite-type oxide is represented by the general formula: A²⁺B⁴⁺₁₋ₓC³⁺ₓO_{3-δ} (provided that 0 < x ≤ 0.5 and 0 < δ < 0. 5) , which has been doped with cations C having a lower valence than B ions, within the range of 50 mol% at the maximum, and, in the general formula, the A ion is at least one element selected from alkaline earth metal elements, the B ion is at least one element selected from lanthanoids, Group IVa elements and Group IVb elements and the C ion is at least one element selected from lanthanoids, Group IIIa elements and Group IIIb elements.

8. The photocatalyst having catalytic activity even in the visible-light range according to claim 7, wherein, in the general formula A²⁺B⁴⁺₁₋ₓC³⁺ₓO_{3-δ}, the A ion is at least one element selected from Ca, Sr and Ba, the B ion is at least one element selected from Zr and Ce, and the C ion is at least one element selected from Y, Er, Ga and In.
